# EUROPÄISCHE PATENTSCHRIFT

(11) **EP 1 564 066 B1**
(45) Veröffentlichungstag und Bekanntmachung des Hinweises auf die Patenterteilung: **22.08.2007**
(21) Anmeldenummer: 04100602.4
(22) Anmeldetag: 13.02.2004
(51) Int. Cl.: B60N 2/44

(54) **Sitz**
Seat
Siège

(43) Veröffentlichungstag der Anmeldung: 17.08.2005
(73) Patentinhaber: Ford Global Technologies, LLC, A subsidary of Ford Motor Company, Dearborn, MI 48126 (US)
(72) Erfinder: Siebertz, Karl, 52457 Aldenhoven (DE); Lindner, Hans-Joachim, Dr., 50725 Köln (DE); Lem, Jeroen, 6212 BE Maastricht (NL); Bendt, Nicole, 52351 Dueren (DE)
(74) Vertreter: Drömer, Hans-Carsten

(56) Entgegenhaltungen:
- GB-A- 2 232 078
- US-A- 4 965 899
- US-A- 5 772 281
- US-A- 5 826 937
- US-A- 5 868 466
- US-A- 5 902 011
- US-A- 6 129 419

## Beschreibung

Die Erfindung betrifft einen Sitz, insbesondere Fahrzeugsitz, mit einem Rahmen, einer Auflage und mindestens ein Formänderungselement zwischen Rahmen und Auflage.

Der Entwurf und die Konstruktion von Fahrzeugsitzen beinhaltet immer einen Kompromiss zwischen verschiedenen Faktoren, wie Gewicht, Größe, Steifigkeit in einigen Bereichen und Flexibilität in anderen Bereichen, Haltbarkeit, Sitzkomfort usw.

Diese Faktoren müssen kombiniert werden, um zu einem Sitz zu gelangen, der ein akzeptables Verhalten in allen Fahrsituationen und unabhängig vom Insassen zeigt.

Ein wichtiges Problem beim Sitzkomfort und Fahrgefühl ist die Übertragung von Vibrationen oder Schwingungen des Fahrzeugs über den Sitz auf die Insassen während der Fahrt. Hierbei besteht ein Konflikt zwischen guter Schwingungs- bzw. Vibrationsdämpfung durch den Sitz und gutem Kontakt zur Fahrbahn bzw. gutem Fahrgefühl. Hierbei spielt auch die Anatomie der Insassen eine nicht unerhebliche Rolle.

Wichtigster Faktor, der die Übertragung der Schwingungen vom Sitz auf die Insassen bestimmt, ist die "Durchlässigkeit" (transmissibility) des Sitzes. Die Durchlässigkeit wird als Verhältnis der Eingangs-Vibrationen (am Fahrzeug bzw. Sitzrahmen) zu den Ausgangs-Vibrationen an der Sitzfläche bzw. Sitzkissen definiert. Bei der Entwicklung wird die Durchlässigkeit der Sitze unter verschiedenen Fahrsituationen und Belastungen und bei unterschiedlichen Insassen optimiert, wobei Kompromisse eingegangen werden müssen, damit der Sitz ein akzeptables Verhalten in allen Fahrsituationen und unabhängig von den Insassen zeigt. Von Interesse ist es daher die Durchlässigkeit zu minimieren.

Viele passive, mechanische Systeme zur Schwingungsdämpfung bei Sitzen sind bekannt. Die passiven Dämpfungselemente fungieren dabei als Filter zwischen Sitz und Fahrzeug, um hochfrequente Schwingungen zu reduzieren. Verwendet werden einerseits so genannte Unterfederungen, die eine sehr gute Schwingungsdämpfung mit hoher Flächenelastizität aufweisen. Nachteilig sind jedoch Druckspitzen im Bereich der Sitzbeinhöcker und Überschwinger bei holpriger Fahrbahn. Ebenfalls bekannt ist es, in den Sitzrahmen eine Blechpfanne einzulegen, auf der ein Schaumblock ruht. Der Schaumblock besitzt eine höhere Punktelastizität als die zuerst genannte Konstruktion, dämpft aber die hochfrequenten Schwingungen ab **5 Hz** schlechter als die Unterfedern.

Diese traditionellen Systeme stellen also insoweit immer einen großen Kompromiss dar und sind insbesondere nur für einen begrenzten Teil der Bevölkerung optimiert. Zudem können sie nicht eingestellt oder während der Fahrt verändert werden.

Sitze sollen ferner die Ermüdung der Insassen, insbesondere des Fahrers, der eine definierte Position zu den Bedienungselementen des Fahrzeugs bei der Fahrt einhalten muss und so ohne Lageänderung schnell z. B. durch Muskelverspannung ermüdet, möglichst vermeiden.

Daher werden auch Systeme verwendet, die einstellbare Formänderungselemente beinhalten, siehe z.B US 5,826,937 A. Die Formänderungselemente erlauben durch Veränderung ihrer Gestalt z. B. die Sitzkontur an den Insassen anzupassen oder eine Massagefunktion einzustellen. Als Formänderungselemente sind z. B. Luftkissen zu verstehen, die mittels des Beaufschlagungsdrucks eingestellt werden können. Andere Technologien, wie Formgedächtnislegierungen, elektrische Stellmotoren usw. sind ebenfalls einsetzbar.

So offenbart die DE 100 63 478 A1 einen Sitz für Kraftfahrzeuge, der unter der Verwendung von mehreren Luftkissen die zeitliche Veränderung der Sitzkontur zur Massage erlaubt. Hierzu werden die Luftkissen zeitlich versetzt mit Druckluft beaufschlagt. Eine Schwingungsdämpfung bzw. Verminderung der Durchlässigkeit ist mit diesem System nicht möglich bzw. nicht vorgesehen. Zudem liegen die Luftkissen direkt unter dem Sitzbein, also in der Region, die bereits mit den höchsten Sitzdrükken beaufschlagt wird. Daher werden weitere Druckspitzen sofort als unangenehm empfunden. Zudem verwendet das Systeme lediglich zwei Luftkissen unterhalb des Sitzkissens bzw. der Sitzfläche, sodass nur eine Pendelbewegung erzeugt werden kann, die lediglich eine Beckenkippung von links nach rechts erlaubt. Eine solche Beckenkippung ist jedoch aus anatomischen Gesichtspunkten unerwünscht.

Aus der US 6,203,105 B1 ist ein System bekannt, das ähnlich dem in der DE 100 63 478 A1 beschriebenen System einstellbare Luftkissen in der Sitzlehne und der Kopfstütze verwendet, um zusätzlich zur Konturverstellung und Massage im Falle eines Aufpralls des Fahrzeugs den Kontakt der Insassen mit den steifen Bestandteilen der Sitze zu verhindern. Hierzu ist das System mit einer Vielzahl von Sensoren ausgerüstet, welche einer entsprechenden Steuerung die gezielte Beaufschlagung der Luftkissen je nach Fahrsituation erlauben. Auch mit diesem System ist jedoch eine gezielte Schwingungsdämpfung bzw. Durchlässigkeitsverminderung, insbesondere der Sitzfläche nicht vorgesehen. Zudem ist auch eine aktive Vermeidung der Ermüdung des Fahrers mit dem System nicht möglich.

Es hat sich gezeigt, dass bereits die Verwendung von Luftkissen eine Verbesserung der Dämpfungseigenschaften des Sitzes bewirkt. Jedoch reicht dies allein und/oder das Vorsehen und die Anwendung von Massagefunktionen der Luftkissen allein zur Vermeidung der Ermüdung des Fahrers nicht aus.

Aufgabe der Erfindung ist es daher, einen Sitz bereitzustellen, der ein verbessertes Dämpfungsverhalten bzw. verkleinerte Durchlässigkeit aufweist. Dies soll unter möglichst vielen Fahrsituationen und unterschiedlichster Anatomie der Insassen möglich sein. Dabei soll der Sitzkomfort hoch sein. Eine weitere Aufgabe ist es, den Sitz derart zu gestalten, dass einer Ermüdung des Fahrers vorbeugt werden kann.

Aus der US 4,965,899 ist ein Sitz mit aufblasbaren Luftkissen zwischen dem Sitzrahmenrahmen und der Sitzauflage bekannt, um die Sitzkontur an den Sitzpassagier anpassen zu können. Die verschiedenen Luftkissen sind u. a. im Bereich der Schenkelauflage, der Sitzseitenführung und der Wirbelsäulenstütze angeordnet. Durch automatisch gesteuerte Luftpumpen werden die Luftkissen aufgepumpt. Damit die Sitzkontur besser an den Sitzpassagier angepasst werden kann, sind zwischen den einzelnen Luftkissen und der Sitzauflage steife Stützplatten angeordnet, die eine gleichmäßige Verformung der Auflage bewirken, wenn die Luftkissen aufgepumpt sind. Die Vielzahl der Luftkissen bieten sehr viele Verstellmöglichkeiten.

Diese Aufgabe wird durch die in Anspruch 1 wiedergegebene Erfindung gelöst.

Dadurch, dass zwischen Formänderungselement und Auflage zusätzlich eine steife Stützplatte angeordnet ist, ist es möglich, die Dämpfung zu verbessern bzw. die Durchlässigkeit zu verringern und zudem eine aktive Dämpfung des Sitzes durch entsprechende Änderung der Formänderungselemente zu erlauben. Vorzugsweise sind mehrere Formänderungselemente vorgesehen.

Unter Auflage werden insbesondere das Sitzkissen und/oder die Rückenlehne verstanden.

Mit der erfindungsgemäßen Lösung ist eine Minimierung bzw. Verringerung der Durchlässigkeit möglich, da zusätzlich zur dämpfenden Auflage ein zweites einstellbares Dämpfungssystem eingeführt wird, das über die Stützplatte mit dem ersten Dämpfungssystem (Auflage bzw. Sitzkissen) gekoppelt ist, wobei die Stützplatte zusätzlich als Schwingungen absorbierende Masse (Tilgungsmasse) dient.

In einer Ausführungsform sind zwischen Formänderungselementen und Sitzrahmen bzw. Stützplatte und Formänderungselementen passive Dämpfungselemente angeordnet. Dies kann z.B. eine Schaumstofflage sein. Dadurch ist das Formänderungselement selber ein- oder beidseitig elastisch mit dem Sitzrahmen bzw. der Stützplatte verbunden. Vorteilhaft kann damit Dämpfungsverhalten des gesamten Sitzes optimiert werden.

In einer bevorzugten Ausführungsform sind die Formänderungselemente mit Druckluft beaufschlagbare Luftkissen. Der traditionelle Aufbau des Sitzes wird also um zwei Komponenten erweitert. Ein oder mehrere Luftkissen liegen auf der Blechpfanne (Rahmen) und eine Stützplatte zwischen den Luftkissen und dem Schaumblock (Sitzkissen). Die Luftkissen wirken dabei als einstellbare Gasfedern zur zusätzlichen Dämpfung. Dabei kann zwischen Luftkissen und Rahmen bzw. Stützplatte und Luftkissen weitere Dämpfungselemente vorgesehen sein, vorzugsweise ein Schaumblock.

Dazu kann die Stützplatte an die Unterseite des Schaumblocks geklebt werden. Die Lagerung der Stützplatte durch den Schaumblock ist dabei in vertikaler Richtung nachgiebig und in horizontaler Richtung fester, da der Schaumblock (Auflage bzw. Sitzkissen) als dicke, aber biegeweiche Membran wirkt. Die Stützplatte verteilt den Druck der Luftkissen, so dass diese nicht mehr punktuell in der Sitzfläche als Druckspitzen wahrgenommen werden. Zudem wirkt Stützplatte als Tilgungsmasse, die je nach Ausführung eine Variation oder Einstellung der dämpfenden Eigenschaften erlaubt. Somit wird der Einstellungsbereich durch die Stützplatte erweitert. Vorteilhafterweise ist die Stützplatte unter dem hinteren Bereich der Sitzfläche angeordnet.

Stützplatte und Luftkissen können auch im Schaumblock eingelegt oder eingeschäumt sein. Dabei müssen die Luftkissen nicht direkt im Kontakt mit der Stützplatte bzw. dem Sitzrahmen stehen, sondern ein Teil des Schaumstoffes des Schaumblockes kann zwischen Sitzplatte und Luftkissen bzw. Sitzrahmen und Luftkissen angeordnet sein.

Wenn der Rahmen die Aufwärtsbewegung der Auflage z. B. des Kissens begrenzt, werden weitere Einstellungsmöglichkeiten der Dämpfung eröffnet, da die Luftkissen die Auflage bzw. das Kissen der Sitzfläche komprimieren, wodurch dessen Dämpfung und Federrate sich verändert.

In einer weiteren Ausführungsform der Erfindung sind die Formänderungselemente über eine Steuerung regelbar, so dass die Dämpfungseigenschaften während der Fahrt der Fahrsituation und/oder dem Insassen angepasst werden können. Dies kann manuell oder bevorzugt automatisch erfolgen.

Sinnvoll ist es, wenn die Steuereinrichtung physiologische Parameter (Größe, Gewicht, Alter, Geschlecht etc.) und/oder Fahrzeugparameter (Massen Steifigkeiten, Radaufhängung, etc) und/oder Fahrsituationsparameter (Unebenheiten, Geschwindigkeit etc.) und/oder Sitzparameter (z. B. Polsterung, Rahmen), die ggf. über Sensoren erfasst werden, zur Steuerung der Formänderungselemente berücksichtigt.

Denkbar ist es weiterhin, dass die Steuerung eine Speichereinrichtung umfasst. D. h. eine Personalisierung mit einer Sitz-Memory-Einstellung in Verbindung mit Sensoren, die aktuelle Parameter aufzeichnen und auswerten, wird möglich. Die Sensoren können z. B. Beschleunigungen, Dämpfereinstellungen, Geschwindigkeit, Lenkwinkel und Gierrate etc. bestimmen. Die Luftkissensteuerung kann dabei Signale aus dem Bus der Fahrzeugelektronik z. B. CAN-Bus abgreifen, mit der "Fahrwerksoftware" verbunden und so in die Fahrzeugelektronik integriert werden.

Ferner erlaubt die Erfindung aktiv die Verhinderung oder zumindest die Verzögerung der Ermüdung der Insassen bzw. des Fahrers.

Es ist im Rahmen der Erfindung erstmalig unter Zugrundelegung eines physiologischen Konzepts festgestellt worden, dass durch genau definierte Bewegungen der Stützplatte eine leichte Bewegung des Beckens provoziert wird und damit eine Umstellung der Muskelaktivierung erwirkt wird, was der Ermüdung vorbeugt.

Der menschliche Bewegungsapparat verfügt über wesentlich mehr Muskeln, als zur eigentlichen Bewegung erforderlich sind, die aber zur Ermüdung beitragen. Bei gleichen Randbedingungen einer Bewegung gibt es daher viele mögliche Aktivierungsmuster der Muskeln. Diese Redundanz ermöglicht eine Muskelaktivierung durch Bewegungen der Stützplatte die physiologischen Optimierungskriterien genügt, einzustellen. Kleine Lageänderungen führen so ohne weiteres zu einer deutlich anderen Aktivierung und entlasten somit bestimmte Muskeln, während andere Muskeln angespannt werden. Diese zyklische Ent-/Anspannung beugt einer Ermüdung vor, weil langfristige konstante Anspannung, die ein wesentlicher Ermüdungsfaktor ist, verhindert wird. Die zyklische Bewegung des Beckens infolge der Lageänderung der Stützplatte und der damit einhergehenden sich ändernde Muskelaktivierung ist nachweisbar und wurde mit einem Haltungsmonitor (Messgerät zur Aufzeichnung der Wirbelsäulenbewegung und Muskelaktivierung) gemessen.

Die Erfindung verhilft dem Fahrer zum aktiven Sitzen, ohne von der Fahraufgabe abzulenken. Hierzu wird eine Vielzahl von Bewegungsmustem mit aktiver Unterstützung und Bewegungen die ein verändertes Muskelaktivierungsschema provozieren erzeugt, wobei die Bewegungen klein genug gehalten werden, um beim Fahren nicht zu stören und keine zusätzliche Belastung darzustellen.

Dies wird erfindungsgemäß durch aktive Unterstützung, wohldosierten Hüben, einer ausreichenden Zahl von Freiheitsgraden und einer anatomisch geschickten Anordnung erreicht.

Die relative Lage der Stützplatte zum Rahmen (Blechpfanne) ist vorzugsweise dazu in drei Freiheitsgraden veränderlich: Vertikale Position und Drehung um die zur Sitzfläche parallelen Achsen. Die Lage der Stützplatte und somit der Sitzfläche wird also durch die Steuerung der Luftkissen gezielt beeinflusst. Ferner sind zyklische Lageänderungen einstellbar.

Somit kann eine Beckenkippung in Richtung von vorne nach hinten und umgekehrt erzeugt werden, die entlastend ist und bei Wirbelsäulengymnastik bevorzugt verwendet wird. Zur Vermeidung von Rückenschmerzen kommt es gerade auf diese besondere Beckenkippung an.

In einer weiteren bevorzugten Ausführungsform des erfindungsgemäßen Sitzes sind vier Formänderungselemente vorgesehen. Vier voneinander unabhängige Luftkissen unter der Stützplatte ermöglichen ein Kippen der Sitzplatte um zwei Achsen, so dass die oben angegebene Bewegung zur Vermeidung der Ermüdung erreicht wird.

Der Hub der einzelnen Formänderungselemente bzw. Luftkissen liegt in der Größenordnung von 5 mm bis 30 mm. Die Ansteuerung kann über Magnetventile erfolgen, die von der Steuerung eingestellt werden. Über geeignete Software ist es möglich, geeignete Druckverläufe zu programmieren, vorzugeben und manuell oder automatisch auszuwählen.

Ein vorteilhafter Steuerungszyklus der Luftkissen umfasst einem U-förmigen Verlauf, wobei die Druckwelle z. B. von vorne nach hinten und links nach rechts verläuft, also etwa von VL nach HL nach HR nach VR nach HR nach HL nach VL (V=vorne, H=hinten, R=rechts, L=links). Geeignete Zyklusdauern betragen ca. 1 min.

Weitere Merkmale, Einzelheiten und Vorteile der Erfindung ergeben sich aus den Unteransprüchen und der Zeichnung. Es zeigen schematisch:
- Fig. 1: eine perspektivische, transparente Ansicht eines erfindungsgemäßen Sitzes;
- Fig. 2: einen Querschnitt durch die Sitzfläche des erfindungsgemäßen Sitzes aus Fig. 1;
- Fig. 3: eine perspektivische, transparente Ansicht einer weiteren Ausführungsform eines erfindungsgemäßen Sitzes und
- Fig. 4: einen Längsschnitt durch die Sitzfläche und Lehne des erfindungsgemäßen Sitzes aus Fig. 3.

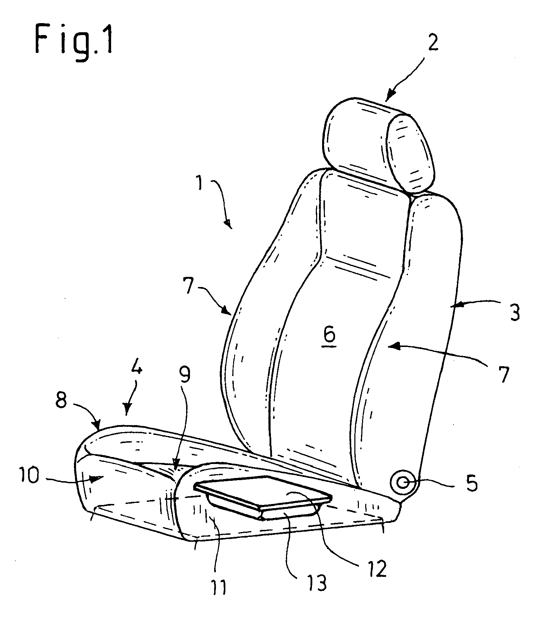

Fig. 1 zeigt schematisch einen als Ganzes mit 1 bezeichneten erfindungsgemäßen Sitz in einer schrägen Perspektive, wobei die Transparenz einen Blick ins Innere des Sitzes ermöglicht. Der Sitz 1 umfasst eine Kopfstütze 2, die oben an einer Rükkenlehne 3 angesetzt ist, die wiederum über ein verstellbares Scharnier 5 mit dem eigentlichen Sitz 4 gekoppelt ist. Der Sitz 1 wird dabei von einem Rahmen 11 aus Stahlblech getragen, der unter der eigentlichen Sitzfläche angeordnet und mit dem Fahrzeug verbunden ist.

Die Rückenlehne 3 weist eine im Längsschnitt etwa S-förmige, anatomisch geformte Auflage 6 für den Rücken des Insassen auf, die an den Seiten mit vorstehenden Rippen 7 begrenzt ist, die dem Insassen seitlich Halt geben.

Der eigentliche Sitz 4 weist ebenfalls eine Auflage 9 auf, die die eigentliche Sitzfläche definiert. Auch hier sind an den Seiten vorstehenden Rippen 8 vorgesehen, die dem Insassen, insbesondere in Kurven seitlich Halt geben.

Die Auflage 9 wird von einem Schaumblock 10 bestehend aus einem geeigneten Natur- und/oder Kunststoff gebildet, der ggf. mit einem geeigneten Material wie Leder bezogen ist. Die Auflage muss die üblichen und bekannten Eigenschaften, wie Federung, Dämpfung, Feuchtigkeitstransport usw. aufweisen. Ferner ist es möglich Heiz- und/oder Kühlvorrichtungen in der Auflage vorzusehen.

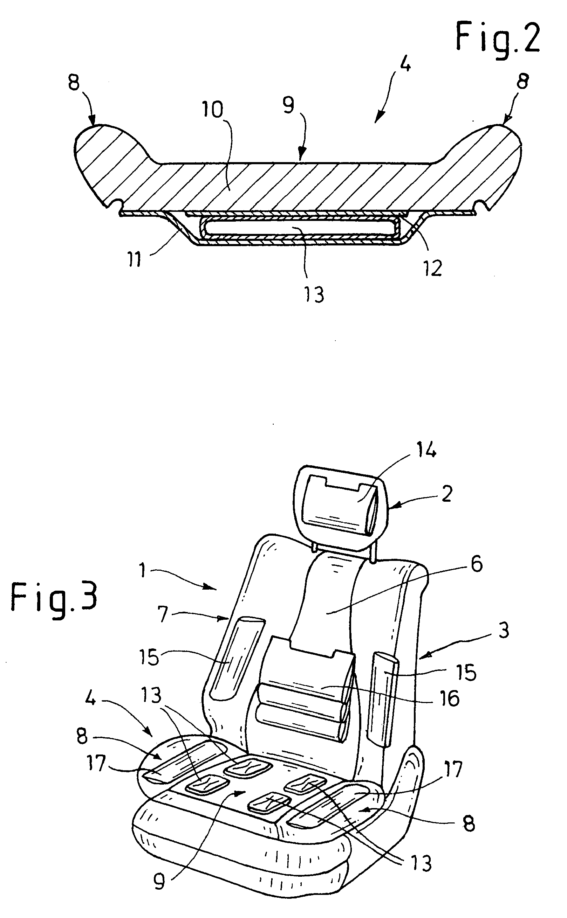

Unterhalb des Schaumblocks 10 ist eine Stützplatte 12 aus steifem Material vorgesehen, wie aus Fig. 2 gut zu entnehmen ist. Die Stützplatte 12 ist dabei unter dem hinteren Bereich der Sitzfläche angeordnet, wo üblicherweise das Gesäß des I n-sassen aufliegt.

Unterhalb der Stützplatte 12 und oberhalb des Rahmens 11, also zwischen Stützplatte 12 und Rahmen 11 liegt ein Luftkissen 13, welches über eine nicht dargestellte Steuerung, Ventile und Kompressor mittels des beaufschlagten Luftdrucks die Einstellung und Verbesserung der Dämpfung des Sitzes auch während der Fahrt erlaubt. Die Steuerung kann nach Auswertung von von Sensoren stammenden Daten über die Fahrsituation und den Insassen den Luftdruck im Luftkissen 13 automatisch regeln. Auch eine manuelle Regelung, Vorgabe oder ein Eingriff in die automatische Regelung ist denkbar.

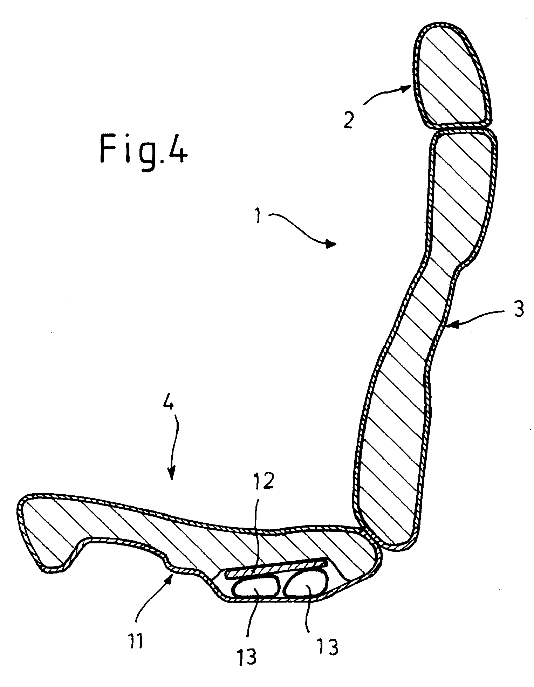

Die in Figuren 3 und 4 abgebildete weitere Ausführungsform eines erfindungsgemäßen Sitzes entspricht im wesentlichen der zuvor beschriebenen, so dass sich entsprechende Bestandteile mit gleichen Bezugszeichen versehen sind. Aus Gründen der Übersichtlichkeit ist die Stützplatte in Fig. 3 nicht gezeigt.

Zusätzlich zur ersten Ausführungsform weist der Sitz 1 der Fig. 3 in den Rippen 7 und 8, der Auflage 6 und der Kopfstütze 2 weitere Luftkissen 15, 17, 16 und 14 auf, die zur Massage und Konturanpassung dienen. Sie sind ebenfalls über die bereits erwähnte Steuerung regel- und/oder bedienbar. Ferner können sie im Falle eines Aufpralls des Fahrzeugs aufgeblasen werden und als zusätzlicher Prallschutz dienen, um einen Kontakt des Insassen mit dem Metallrahmen 11 des Sitzes zu verhindern.

Der wesentlichste Unterschied des Sitzes nach Figur 3 ist das Vorhandensein von vier Luftkissen 13 unter dem eigentlichen Sitz 9 zwischen der Stützplatte 12 und dem Rahmen 11. Die Luftkissen sind dabei derart angeordnet, dass sie unter den Ecken der etwa rechteckigen Sitzfläche liegen.

Die vier voneinander unabhängig steuerbaren und beaufschlagbaren Luftkissen 13 unter der Stützplatte 12 ermöglichen neben der vertikalen Positionierung ein Kippen der Stützplatte 12 um zwei parallel zur Ebene der Sitzfläche und senkrecht zueinander verlaufenden Achsen. Somit kann eine Beckenkippung in Richtung von vorne nach hinten und umgekehrt erzeugt werden, die entlastend ist und z. B. bei Wirbelsäulengymnastik bevorzugt verwendet wird. Zur Vermeidung von Rückenschmerzen kommt es gerade auf diese Beckenkippung an. Diese Bewegung kann mit einer Kippbewegung von links nach rechts gekoppelt werden, so dass eine besonders gute Vermeidung der Ermüdung durch das durch die Beckenbewegung bedingte abwechselnde zyklische An- und Entspannen der Muskulatur erreicht wird.

Der Hub der einzelnen Luftkissen liegt in einer Größenordnung zwischen 5 mm und 30 mm, wobei der größere Hub lediglich für die Höhenverstellung verwendet wird.

Über entsprechende Software ist es möglich, geeignete Druckverläufe zu programmieren, vorzugeben und manuell oder automatisch auszuwählen.

Ein vorteilhafter Steuerungszyklus der Luftkissen umfasst einem U-förmigen Verlauf der Druckwelle bzw. der Beaufschlagung der Luftkissen 13. Der Zyklus verläuft dabei z. B. von vorne nach hinten und links nach rechts, also etwa von VL nach HL nach HR nach VR nach HR nach HL nach VL (V=vorne, H=hinten, R=rechts, L=links) und dauert ca. 1 min.

In Fig. 4 erkennt man die von vorne nach hinten gerichtete Kippbewegung der Stützplatte 12 durch unterschiedliche Beaufschlagung der entsprechenden Luftkissen 13, wobei das oder die hinteren Luftkissen stärker beaufschlagt sind, also einen größeren Hub der Stützplatte bewirken, sodass eine Neigung der Stützplatte und entsprechend der Sitzfläche erzielt wird.

Besonders geeignet ist die Erfindung für die Sitzfläche von Kraftfahrzeugsitzen. Es ist jedoch auch möglich entsprechende Konstruktionen in der Rückenlehne vorzusehen.

## Patentansprüche

1. Sitz, insbesondere Fahrzeugsitz, mit einem Rahmen (11), einer Auflage (6,9) und mindestens einem Formänderungselement (13) zwischen Rahmen (11) und Auflage (9), wobei zwischen Formänderungselement (13) und Auflage (9) zusätzlich eine steife Stützplatte (12) angeordnet ist, **dadurch gekennzeichnet, daß** die Formänderungselemente (13) über eine Steuerung, insbesondere automatisch regelbar sind,
wobei
die Steuereinrichtung physiologische Parameter über Sensoren zur Steuerung der Formänderungselemente (13) berücksichtigt, und wobei die Steuereinrichtung Fahrzeugparameter und/oder Fahrsituationsparameter und/oder Sitzparameter über Sensoren zur Steuerung der Formänderungselemente (13) berücksichtigt.

2. Sitz nach Anspruch 1,
**dadurch gekennzeichnet, daß**
zwischen dem Formänderungselement (13) und Rahmen (11) und / oder Stützplatte (12) und Formänderungselement (13) passive Dämpfungselemente angeordnet sind.

3. Sitz nach Anspruch 1 oder 2,
**dadurch gekennzeichnet, daß**
die Auflage ein Sitzkissen (9) und/oder Rückenlehne (6) ist.

4. Sitz nach Anspruch 1, 2 oder 3,
**dadurch gekennzeichnet, daß**
die Formänderungselemente mit Druckluft beaufschlagbare Luftkissen (13) sind.

5. Sitz nach einem der vorhergehenden Ansprüche,
**dadurch gekennzeichnet, daß**
die Steuerung eine Speichereinrichtung umfasst.

6. Sitz nach einem der vorhergehenden Ansprüche 3 bis 5,
**dadurch gekennzeichnet, daß**
die Stützplatte (12) unter dem hinteren Bereich der Sitzfläche angeordnet ist.

7. Sitz nach einem der vorhergehenden Ansprüche,
**dadurch gekennzeichnet, daß**
vier Formänderungselemente (13) vorgesehen sind.

8. Sitz nach einem der vorhergehenden Ansprüche 4 bis 7,
**dadurch gekennzeichnet, daß**
die Hülle der Luftkissen (13) aus einem dehnbaren Material besteht.

9. Sitz nach einem der vorhergehenden Ansprüche 4 bis 8,
**dadurch gekennzeichnet, daß**
der Hub der Luftkissen (13) ca. 5 mm bis 30 mm beträgt.

10. Sitz nach einem der vorhergehenden Ansprüche 5 bis 9,
**dadurch gekennzeichnet, daß**
die Steuerung Ventile und mindestens eine Befüll-/Entladevorrichtung zur Steuerung der Füllung der Formänderungselemente, insbesondere Luftkissen (13), aufweist.

11. Sitz nach einem der vorhergehenden Ansprüche 5 bis 10,
**dadurch gekennzeichnet, daß**
die Steuerung über die Veränderung der Formänderungselemente (13) die relative Lage der Stützplatte (12) zum Rahmen (11) ändert.

12. Sitz nach Anspruch 11,
**dadurch gekennzeichnet, daß**
sich die Lage der Stützplatte (12) in der vertikalen Position ändert und/oder eine Drehung um zur Sitzfläche parallele Achsen erfolgt.

13. Sitz nach Anspruch 11 oder 12,
**dadurch gekennzeichnet, daß**
sich die Lage der Stützplatte (12) zyklisch ändert.

14. Sitz nach einem der vorhergehenden Ansprüche,
**dadurch gekennzeichnet, daß**
der Rahmen (11) die Aufwärtsbewegung der Auflage (6,9) begrenzt.

## Claims

1. Seat, in particular vehicle seat, with a frame (11), a pad (6,9) and at least one shape-changing element (13) between frame (11) and pad (9), with a stiff supporting plate (12) additionally being arranged between shape-changing element (13) and pad (9), **characterized in that** the shape-changing elements (13) can be regulated, in particular automatically, via a controller, with the control device taking physiological parameters into consideration via sensors in order to control the shape-changing elements (13), and with the control device taking vehicle parameters and/or driving situation parameters and/or seat parameters into consideration via sensors in order to control the shape-changing elements (13).

2. Seat according to Claim 1, **characterized in that** passive damping elements are arranged between the shape-changing element (13) and frame (11) and/or supporting plate (12) and shape-changing element (13).

3. Seat according to Claim 1 or 2, **characterized in that** the pad is a seat cushion (9) and/or backrest (6).

4. Seat according to Claims 1, 2 or 3, **characterized in that** the shape-changing elements are air cushions (13) which can be charged with compressed air.

5. Seat according to one of the preceding claims, **characterized in that** the controller comprises a memory device.

6. Seat according to one of preceding Claims 3 to 5, **characterized in that** the supporting plate (12) is arranged under the rear region of the seat surface.

7. Seat according to one of the preceding claims, **characterized in that** four shape-changing elements (13) are provided.

8. Seat according to one of the preceding Claims 4 to 7, **characterized in that** the casing of the air cushions (13) is composed of an extensible material.

9. Seat according to one of the preceding Claims 4 to 8, **characterized in that** the travel of the air cushions (13) is approx. 5 mm to 30 mm.

10. Seat according to one of the preceding Claims 5 to 9, **characterized in that** the controller has valves and at least one filling/discharging device for controlling the filling of the shape-changing elements, in particular air cushions (13).

11. Seat according to one of the preceding Claims 5 to 10, **characterized in that** the controller changes the relative position of the supporting plate (12) to the frame (11) by changing the shape-changing elements (13).

12. Seat according to Claim 11, **characterized in that** the position of the supporting plate (12) changes in the vertical position and/or rotation about axes parallel to the seat surface takes place.

13. Seat according to Claim 11 or 12, **characterized in that** the position of the supporting plate (12) changes cyclically.

14. Seat according to one of the preceding claims, **characterized in that** the frame (11) restricts the upwards movement of the pad (6,9).

## Revendications

1. Siège, en particulier siège de véhicule, avec un châssis (11), un support (6, 9) et au moins un élément de changement de forme (13) entre le châssis (11) et le support (9), dans lequel une plaque d'appui rigide (12) est disposée en plus entre l'élément de changement de forme (13) et le support (9), **caractérisé en ce que** les éléments de changement de forme (13) sont réglables, en particulier automatiquement, par une commande, dans lequel le dispositif de commande tient compte de paramètres physiologiques au moyen de capteurs pour la commande des éléments de changement de forme (13) et dans lequel le dispositif de commande tient compte de paramètres du véhicule et/ou de paramètres de situation de conduite et/ou de paramètres de siège au moyen de capteurs pour la commande des éléments de changement de forme (13).

2. Siège selon la revendication 1, **caractérisé en ce que** des éléments d'amortissement passifs sont disposés entre l'élément de changement de forme (13) et le châssis (11) et/ou entre la plaque d'appui (12) et l'élément de changement de forme (13).

3. Siège selon la revendication 1 ou 2, **caractérisé en ce que** le support est un coussin de siège (9) et/ou un coussin de dossier (6).

4. Siège selon la revendication 1, 2 ou 3, **caractérisé en ce que** les éléments de changement de forme sont des coussins d'air (13) pouvant être alimentés en air comprimé.

5. Siège selon l'une quelconque des revendications précédentes, **caractérisé en ce que** la commande comprend un dispositif de mémoire.

6. Siège selon l'une quelconque des revendications précédentes 3 à 5, **caractérisé en ce que** la plaque d'appui (12) est disposée en dessous d'une zone arrière de la surface du siège.

7. Siège selon l'une quelconque des revendications précédentes, **caractérisé en ce qu'**il est prévu quatre éléments de changement de forme (13).

8. Siège selon l'une quelconque des revendications précédentes 4 à 7, **caractérisé en ce que** l'enveloppe des coussins d'air (13) se compose d'une matière extensible.

9. Siège selon l'une quelconque des revendications précédentes 4 à 8, **caractérisé en ce que** la course des coussins d'air (13) vaut environ de 5 à 30 mm.

10. Siège selon l'une quelconque des revendications précédentes 5 à 9, **caractérisé en ce que** la commande comprend des soupapes et au moins un dispositif de remplissage / évacuation pour la commande du remplissage des éléments de changement de forme, en particulier des coussins d'air (13).

11. Siège selon l'une quelconque des revendications précédentes 5 à 10, **caractérisé en ce que** la commande du changement des éléments de changement de forme (13) modifie la position relative de la plaque d'appui (12) par rapport au châssis (11).

12. Siège selon la revendication 11, **caractérisé en ce que** la position de la plaque d'appui (12) varie en position verticale et/ou il se produit une rotation autour d'axes parallèles à la surface du siège.

13. Siège selon la revendication 11 ou 12, **caractérisé en ce que** la position de la plaque d'appui (12) varie de façon cyclique.

14. Siège selon l'une quelconque des revendications précédentes, **caractérisé en ce que** le châssis (11) limite le mouvement ascendant du support (6, 9).
